# EUROPEAN PATENT SPECIFICATION

(11) **EP 1 435 334 B1**
(45) Date of publication and mention of the grant of the patent: **20.08.2008**
(21) Application number: 02765466.4
(22) Date of filing: 10.09.2002
(51) Int. Cl.: B65G 59/06, A61J 3/00, G07F 11/04, G07F 11/16

(54) **MEDICINE FEEDER**
AUSGEBER FÜR ARZNEIMITTEL
DISPOSITIF D'ALIMENTATION DE CONTENANT DE MEDICAMENTS

(30) Priority: 10.09.2001 JP 2001273754
(43) Date of publication of application: 07.07.2004
(73) Proprietor: Yuyama Mfg. Co., Ltd., Toyonaka-shi, Osaka 561-0841 (JP)
(72) Inventor: YUYAMA, Shoji, c/o. YUYAMA MFG. CO., LTD., Toyonaka-shi, Osaka 561-0841 (JP)
(74) Representative: Selting, Günther
(86) International application number: PCT/JP2002/009186
(87) International publication number: WO 2003/022719

(56) References cited:
- CH-A- 347 472
- GB-A- 837 911
- GB-A- 1 368 208
- GB-A- 2 304 705
- JP-A- 6 227 670
- JP-A- 7 210 735
- JP-A- 7 267 370
- JP-A- 8 053 228
- JP-A- 10 265 052
- JP-A- 49 068 459
- JP-A- 2001 019 114
- JP-A- 2001 052 054
- JP-A- 2001 198 194
- US-A- 3 747 803
- US-A- 5 799 824
- US-B1- 6 170 230
- PATENT ABSTRACTS OF JAPAN vol. 010, no. 062 (M-460), 12 March 1986 (1986-03-12) -& JP 60 209435 A (TERAOKA SEIKOU:KK), 22 October 1985 (1985-10-22)

## Description

### TECHNICAL FIELD

The present invention relates to a medicine feeding device, more particularly to a medicine feeding device suitable for feeding specific medicines such anticancer drugs.

### BACKGROUND ART

Generally, specific medicines such as anticancer drugs having toxicity are housed in medicine containers such as ampoules. The medicine containers housing such specific medicines are required to reliably prevent damages during feeding or an error in the feed number from occurring Therefore, feeding of such specific medicines have conventionally been carried out manually.

However, automatic feeding is disparately expected by large hospitals and the like where the feeding number of medicines is high. In such case, the problems of damage on the medicines during feeding and an error in the feeding number must be prevented from being occurred on any account. However, the conventional medicine feeding devices do not have such construction.

Accordingly, it is a primary object of the present invention to provide a medicine feeding device implementing reliable prevention of the medicine containers from being damaged during feeding or an error in the feed number from creeping in.

U.S. 3,747,803 to which the preamble of claim 1 refers, discloses a dispenser for groups of nested articles like chip-type snack foods. The apparatus dispenses the articles from the lower end of a generally vertical stack of nested articles. Clamping means are provided for holding the residuum of a stack of articles in a gravity feed magazine while the lower most group of articles is lowered on a support member. Means are provided for synchronizing the operation of the clamping means with the movement of the support member so that the stack is progressively lowered as successive lower most groups are dispensed from the lower end of said stack.

U.S. 6,170,230 B1 discloses a medication dispensing apparatus containing a plurality of different kinds of medication separately. The apparatus dispenses the medication to pack them into a package belt and discharges the package belt. A cutting device is provided for cutting the package belt into short package belts. A stacking device is provided for stacking the short package belts and a bundling device is provided for bundling the stacked short package belts.

### DISCLOSURE OF THE INVENTION

The subject matter of the invention is defined by claim 1. Accordingly, there is provided an article feeding device comprising
a cassette for housing articles in a vertical row,
an article feeding portion, and
holding means for holding the articles positioned on a bottom of the cassette,
the holding means being composed of a pair of open/close arms having a lower horizontal portion provided in detachable and rotatable manner. The article feeding portion comprises:
transfer means disposed below the cassette and adapted to be vertically movable to downwardly transfer the lowermost article held by the holding means,
discharge means for discharging the article moved downward by the transfer means in a horizontal direction, and
driving means for terminating a holding state established by the holding means, holding a second article from the bottom while downwardly moving the transfer means by a predetermined distance, and then downwardly moving the transfer means.

The article feeding device is characterized in that
the article feeding device is a medicine feeding device,the articles housed in the cassette are medicine containers, and the article feeding portion is a medicine container feeding portion.

The cassette is detachably mounted on the medicine container feeding portion. The holding means are provided on the cassette.

The horizontal portion has a resinous support portion provided with an inclined plane for supporting the medicine container, which enables medicines to be reliably fed one by one if they are damageable medicines such as those in ampoules, and
the driving means are provided for upwardly moving the transfer means for lifting the lowermost medicine container of the vertical row held by the holding means.
With this construction, during feeding operation of the medicine containers, the holding means is always in the state of being held by the transfer means. Therefore, the medicine containers can be smoothly fed without an impulse force imposed thereon. Further, since only one medicine container is feedable by the transfer means at any given time, it becomes possible to accurately keep track of the feed number.

The transfer means may be vertically movable between a position above a support position provided by a support portion of the open/close arm and a position below a discharge position provided by the discharge means, which enables medicines to be smoothly fed without damage being inflicted thereon.

It is preferable that the driving means is composed of a single motor, and a driving force of the motor is transmitted to the transfer means and the holding means via a driving shaft and a cam integrated with the driving shaft, so that stable operation can be achieved with simplified construction.

It is preferable that an operation status detection means for detecting whether or not retrieval of the medicine container is in operation is provided, and if it is determined that the retrieval is not in operation based on a detection signal provided by the operation status detection means, then feeding of medicines is stopped, which makes it possible to prevent handling of medicines by a third party other than a qualified person in charge.

The cassette may be provided with a medicine detection means allowing detection of each medicine housed in a vertical stack, which makes it possible to keep track of stockout or clogging of medicines in the cassette with reliability.

### BRIEF DESCRIPTION OF THE DRAWINGS

FIG. 1 is a front view showing a medicine feeding device according to the present embodiment;
FIG. 2 is a plane view showing a medicine feeding portion in Fig. 1;
FIG. 3 is a front view of Fig. 2;
FIG. 4 is a side view of Fig. 1;
FIG. 5 is a front view showing open/close arms in Fig: 1;
FIG. 6 is a front view showing a transfer portion in Fig. 1;
FIG. 7A is a front view showing the operation state of Fig. 1;
FIG. 7B is a side view showing the operation state of Fig. 1;
FIG. 8A is a front view showing the operation state of Fig. 1;
FIG. 8B is a side view showing the operation state of Fig. 1;
FIG. 9A is a front view showing the operation state of Fig. 1;
FIG. 9B is a side view showing the operation state of Fig. 1;
FIG. 10A is a front view showing the operation state of Fig. 1;
FIG. 10B is a side view showing the operation state of Fig. 1;
Fig. 11 is a front view showing a medicine feeding device according to another embodiment; and
Fig. 12 is a front view showing a medicine feeding device according to still another embodiment.

### BEST MODE FOR CARRYING OUT THE INVENTION

Embodiments of the invention will now be described with reference to the accompanying drawings.

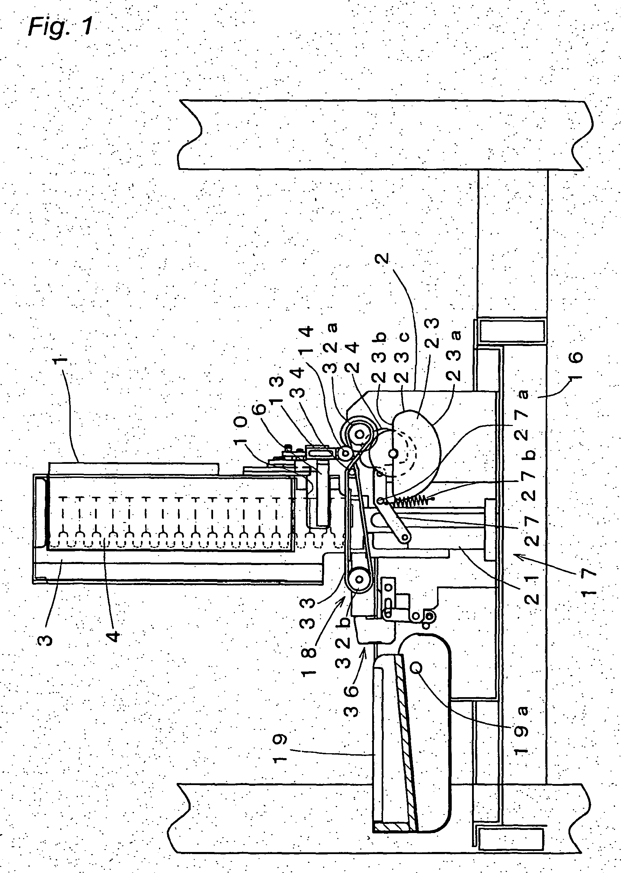

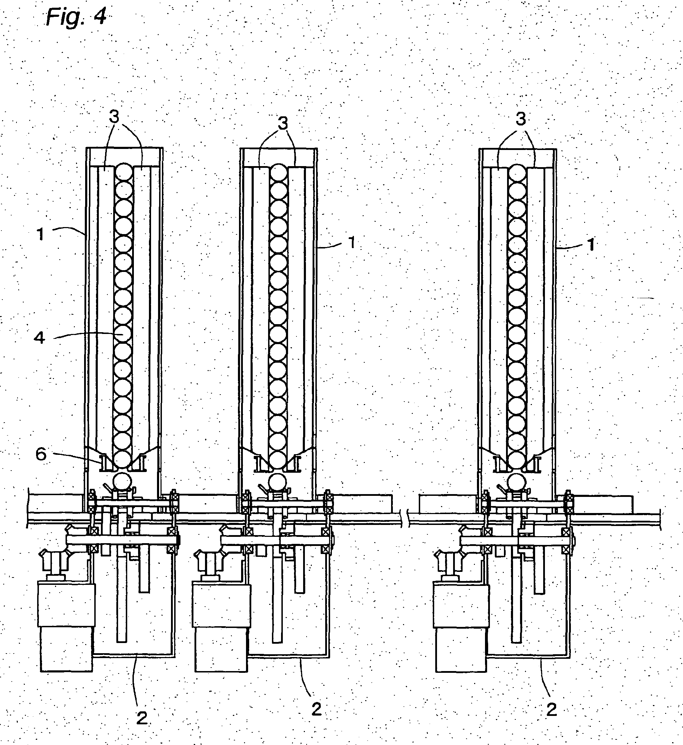

Fig. 1 shows a cassette 1 and a medicine feeding portion 2 in the medicine feeding device according to the present embodiment. In the medicine feeding device, a plurality of medicine feeding portions 2 are disposed in parallel in a main unit, and the cassette 1 is detachably mounted on each medicine feeding portion 2 (see Fig. 4).

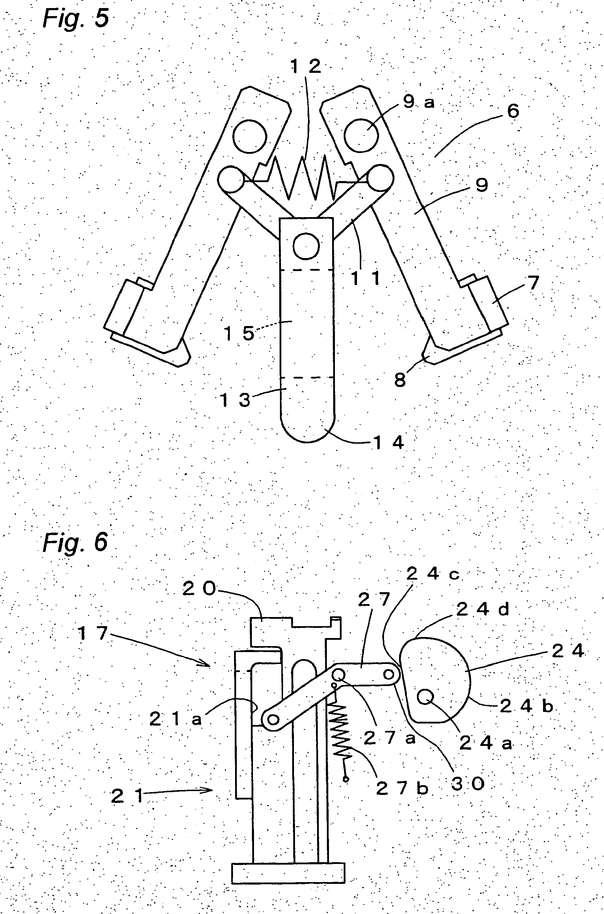

The cassette 1 receives ampoules 4 exemplifying medicine containers in the present invention in a vertical row along a built-in guide portion 3The ampoules 4 contain specific medicines such as anticancer drugs. Each ampoule 4 is detected by an ampoule detection sensor (unshown) exemplifying the medicine detection means that is disposed at a specified pitch (a distance between the centers of the stacked ampoules 4) in a vertical direction along the lateral side of the cassette 1. This makes it possible to reliably detect stockout or clogging of the ampoules 4, and to prevent a feeding error of the ampoules 4 from occurring. On the lower end portion of the cassette 1, there is disposed a pair of open/ close arms 6 exemplifying the holding means according to the present embodiment. The open/ close arms 6 are almost L-shaped, and a lower-side horizontal portion 7 has a resinous support portion 8 provided with an inclined plane as shown in Fig. 5. The open/ close arms 6 are constructed such that an upper-side vertical portion 9 is disposed on the front face of the cassette 1 rotatably around a spindle 9a, and the support portion 8 is inserted into the cassette 1 through a notch portion 10 provided on the lower lateral face of the cassette 1 so as to be able to support a ampoule 4 positioned in the bottom. Each vertical portion 9 of the open/ close arms 6 is rotatably linked to one end portion of a link 11 on the lower side of the spindle 9a, and the links 11 are biased inwardly (in a direction approaching each other) by a spring 12. The other end portions of the links 11 are rotatably linked to each other, and a transmission portion 13 extending vertically downward is fixed thereto. At the lower end portion of the transmission portion 13, there is provided a pressure receiving portion 14 that is protruded toward the horizontal direction for pressing upward. Further, a resinous stopper portion 15 is provided on the back side of the transmission portion 13, and the vertical portions 9 of the open/ close arms 6 closed by a biasing force of the spring 12 come into contact with the stopper portion 15 so as to position the support portions 8 at specified positions.

As shown in Fig. 1, the medicine feeding portion 2 is constructed such that a transfer portion 17 exemplifying the transfer means according to the present invention, an operation portion 18 and a closure plate 19 are disposed on a base 16.

As shown in Fig. 6, the transfer portion 17 is constructed such that a transfer base 20 is vertically moved by an auxiliary arm 27 that is provided on the base 16 rotatably around a spindle 27a. The auxiliary arm 27 is biased counter clockwise around the spindle 27a of Fig. 6 by a spring 27b. The transfer base 20 is curved so that its upper face fits along the perimeter face of the ampoule 4, and has a leg portion 21 having a long hole 21a guided by an unshown guide portion provided on the base 16. The transfer base 20 is vertically moved between the position slightly above the support position of the open/ close arms 6 by the support portion 8 and the position slightly below the conveyance line by a later-described belt 33.

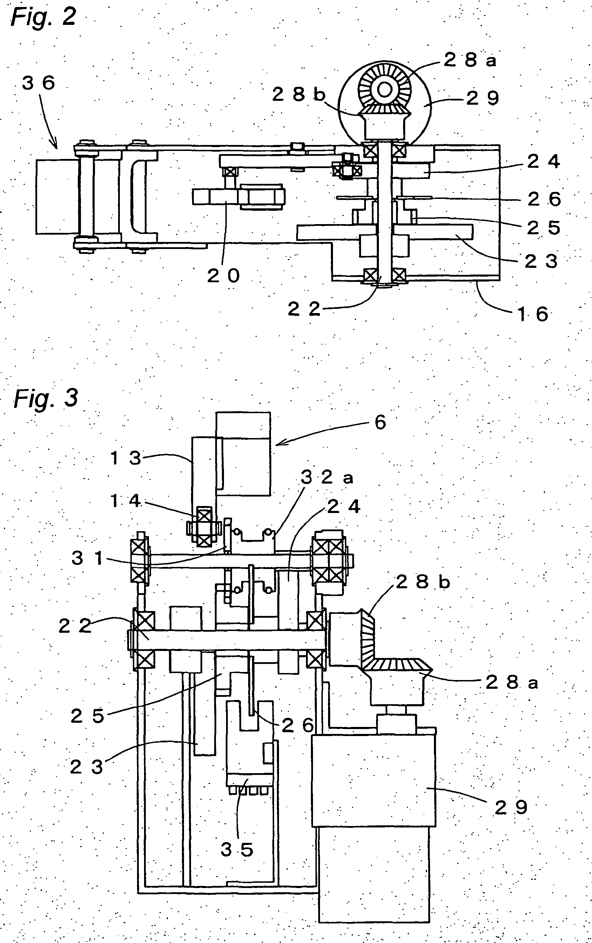

In the operation portion 18, a first cam 23, a second cam 24, a driving gear 25 and a detection target disk 26 are integrated with a rotating shaft 22 for directly operating the open/ close arms 6 and indirectly operating the transfer portion 17 via the auxiliary arm 27 (see Fig. 1) as shown in Fig. 2 and Fig. 3.

Power from a single motor 29 exemplifying the driving means according to the present invention is transmitted to the rotating shaft 22 via bevel gears 28a, 28b provided in one end portion.

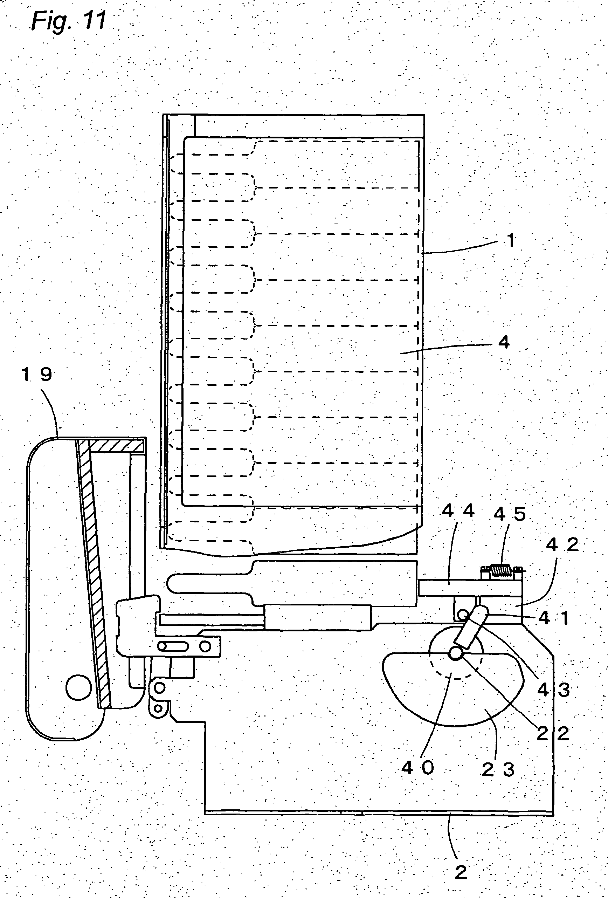

The first cam 23 has an almost semicircle shape as shown in Fig. 11, and its perimeter portion engages with the pressure receiving portion 14 formed on the transmission portion 13 of the open/ close arms 6 so as to part the support portions 8, which cancels the supported state of the ampoule 4 positioned in the bottom of the cassette 1. In an interface portion between a circular arc portion 23a and a linear portion 23b of the first cam 23, an inclined plane 23c is formed on the side of a counter clockwise direction (rotation direction side) for implementing smooth pressing operation of the pressure receiving portion 14.

The second cam 24, as shown in Fig. 6, is formed such that an outer edge of a circular arc portion 24b is gradually coming closer to the rotating shaft 22 from the counter clockwise direction side (rotation direction side) to the clockwise direction. In a region extending from a linear portion 24c to the circular arc portion 24b, there is formed a circular arc portion 24d smaller in radius of curvature from the circular arc portion 24b.

The auxiliary arm 27 is provided on the base 16 rotatably around the spindle 27a in a middle bending portion, and is biased by a bias force by the spring 27b to a counter clockwise direction in Fig. 6. One end portion of the auxiliary arm 27 comes into contact with an outer circumferential edge of the second cam 24 so that the auxiliary arm 27 reciprocally rotates according to the rotation of the second cam 24. A pressing portion 30 is formed on the other end portion of the auxiliary arm 27. The pressing portion 30 is positioned at a rectangular hole 21 a formed in the leg portion 21 of the transfer portion 17 for vertically moving the transfer base 20.

The positional relation between the first cam 23 and the second cam 24 is such that at the time when the transfer base 20 is upwardly moved by the second cam 24 and the ampoule 4 positioned in the bottom of the cassette 1 is lifted, the support portions 8 of the open/ close arms 6 are parted by the first cam 23. The both cams are fixed to the same rotating shaft 22, and therefore properly setting their positional relationship in a rotation direction makes it possible to get appropriate timing of the operation of the transfer base 20 and the open/ close arms 6 with reliability. Consequently, less impact force acts on the ampoule 4, thereby eliminating the possibility of damage thereon.

A driven gear 31 is geared with a driving gear 25. The driven gear 31 is fixed to an axis of a pulley 32a. In a position away from the pulley 32a by a specified distance from the pulley 32a, another pulley 32b is disposed as shown in Fig. 1, and a belt 33 exemplifying the discharge means according to the present invention is hung on the both pulleys 32a, 32b. The belt 33 is made of a material having flexibility such as rubber, and is hung on the both pulleys 32a, 32b so as to form two lines crossed in a middle section. The belt 33 is pushed down by a guide rod 34 in the middle section of the both pulleys 32a, 32b so that its contact area with the pulley 32a on the driving side is increased and slip of the belt 33 is suppressed.

The detection target disk 26 is, as shown in Fig. 3, provided with a detection target portion composed of such member as a permanent magnet, a notch and a through hole at a specified position, and an initial position of the detection target disk 26 is detected by a rotation position detection sensor 35 composed of a light emitting device and a light receiving device. Every time the initial position is detected, it means that the rotating shaft 22 is rotated once.

The closure plate 19, which is disposed rotatably around a spindle 19a as shown in Fig. 1, rotates in a horizontal direction when a registered fingerprint is detected by an unshown fingerprint identification device, allowing driving of the medicine feeding device and takeout of a medicine fed from the medicine feeding portion 2. Further, it is detected whether or not the apparatus is in operation by a floor mat (unshown) exemplifying the operation status detection means according to the present invention. When the floor mat does not detect the operation status over a specified time, the closure plate 19 automatically rotates in vertical direction to close an outlet port so as to prevent the risk of arbitrary administration. It is to be noted that the operation status may be detected by area sensors and the like in addition to the floor mat.

It is to be noted that the outlet port is provided with a locking member 36 that is locked and unlocked to/from the cassette 1 mounted and dismounted on/from the medicine feeding portion 2.

Next, the operation of the medicine feeding device is described.

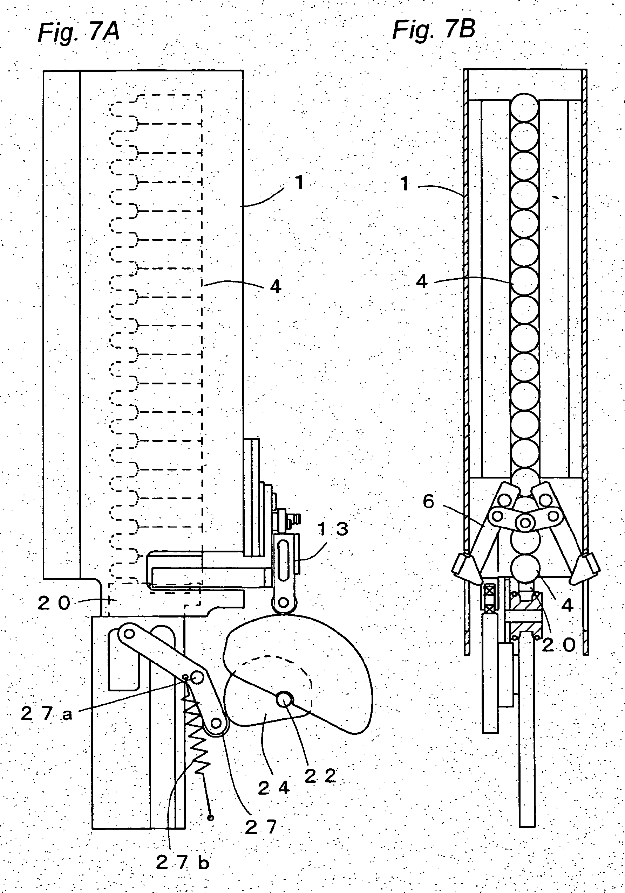

Upon identification of a fingerprint by the fingerprint identification device, the closure plate 19 is rotated to allow feeding operation of medicines by the medicine feeding device. When the type and number of medicines are inputed from an unshown operation portion, the motor 29 of a medicine feeding portion 2 on which a cassette 1 housing corresponding medicines is mounted is driven. Consequently, the rotating shaft 22 is rotated, and from the initial state shown in Fig. 1, first, one end portion of the auxiliary arm 27 is pressed by the circular arc portion 24b of the second cam 24. The auxiliary arm 27 is rotated, as shown in Fig. 7, clockwise around the spindle 27a to upwardly move the transfer base 20. The transfer base 20 lifts the ampoule 4 positioned in the bottom of the cassette 1 supported by the support portion 8 of the open/ close arms 6.

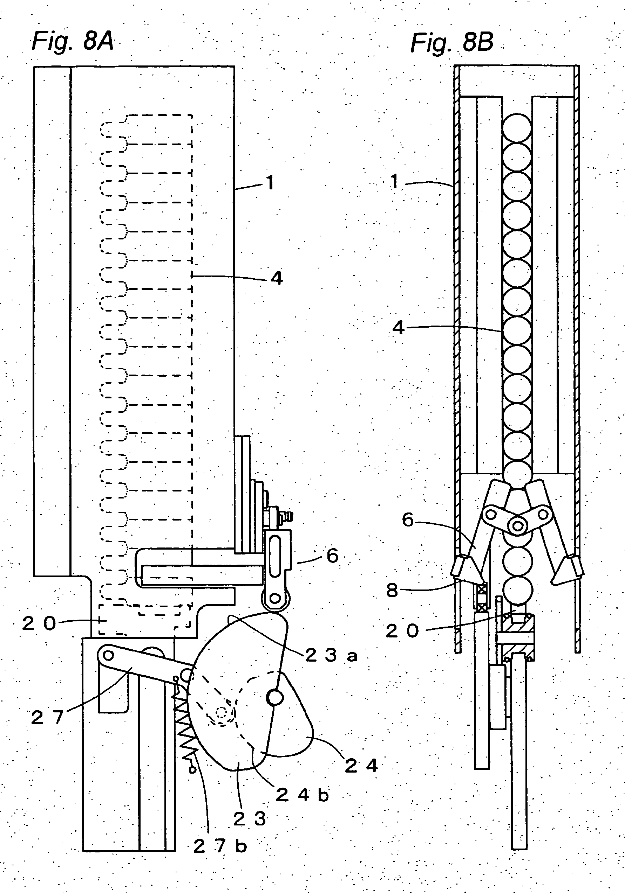

As shown in Fig. 8, the transfer base 20 is gradually moved downward as one end portion of the auxiliary arm 27 moves the circular arc portion 24b of the second cam 24. During this movement, the first cam 23 also rotates, and the circular arc portion 23a upwardly pushes the pressure receiving portion 14. Then, the vertical portion 9 is rotated through the transmission portion 13, which parts the support portions 8. The parted state is maintained while the pressure receiving portion 14 moves the circular arc portion 23a of the first cam 23, i.e., while the transfer base 20 moves downward.

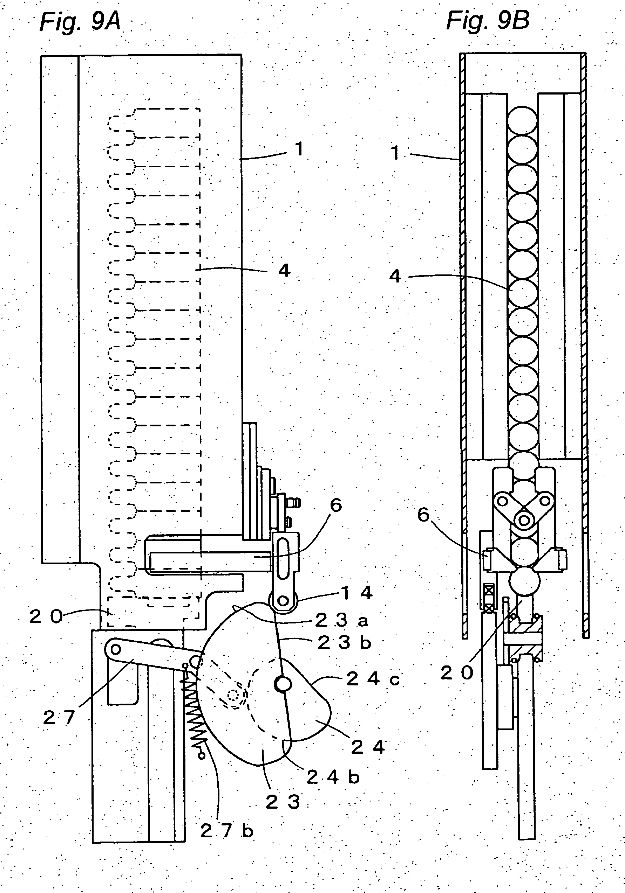

At the time when only the ampoule 4 positioned in the bottom moves lower than the support portion 8, the pressure receiving portion 14 of the open/ close arms 6 moves from the circular arc portion 23a of the first cam 23 from the linear portion 23b as shown in Fig. 9. This enables the support portion 8 of the open/ close arms 6 to support the second ampoule 4 from the bottom smoothly.

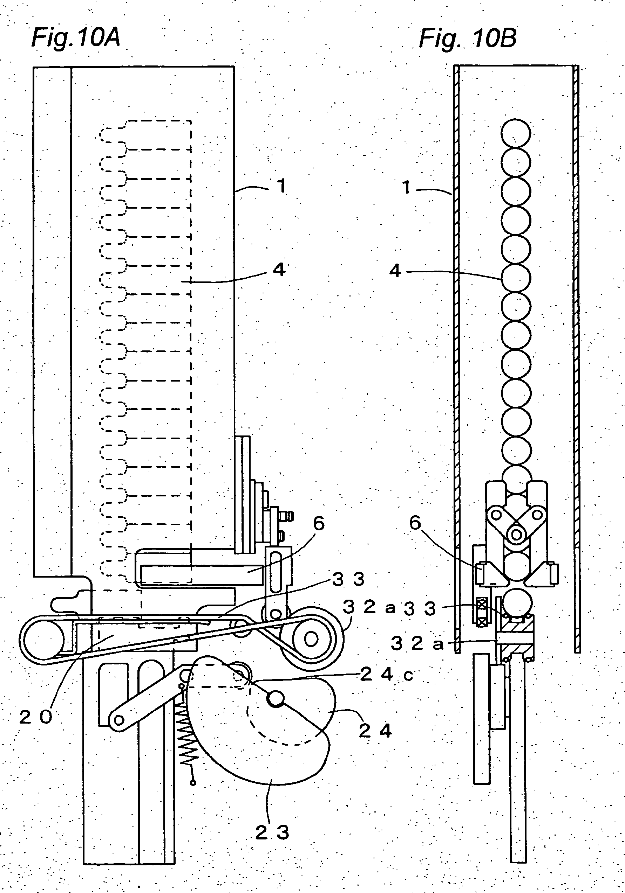

The transfer base 20 keeps on moving downward, and as shown in Fig. 10, the ampoule 4 is placed on the belt 33. The belt 33 moves the ampoule 4 placed thereon in horizontal direction by power of the motor 29 transmitted to one pulley 32a.

Thus, one ampoule 4 can be fed by every one rotation of the rotating shaft 22, and therefore a specified number of ampoules 4 can be fed by driving of the motor 29 maintained till the number of the ampoules 4 detected in the detection target portion of the detection target disk 26 by the rotation position detection sensor 35 reaches an inputed feeding number of medicines.

According to the above-constructed medicine feeding device, the driving means is implemented by a single motor 29, which makes it possible to simplify the construction and decrease production costs. Further, since the first cam 23 for rotating the open/ close arms 6, the second cam 24 for vertically moving the transfer base 20 and the like are all fixed to the same rotating shaft 22, the positional relation of each member may be set simply and accurately. Furthermore, since the ampoule 4 is transferred by the transfer base 20 without an impact force being inflicted thereon, problems such as leakage of drug solution due to breakage of the ampoule 4 are not occurred.

It is to be noted that although in the above-described embodiment, the construction for feeding the ampoules 4 as medicine containers is described boxes containing medicines can still be fed in the same construction.

Further, although in the above-described embodiment, the ampoules 4 are fed to the outlet port by the pulley 32 and the belt 33, they can be fed by horizontal movement of a rod as shown in Fig. 11. In Fig. 11, a third cam 40 is integrated with the rotating shaft 22. Above the third cam 40, there is provided a base portion 42, on which a rod 44 is disposed slidably in horizontal direction in the figure. As an extension portion 41 provided on the third cam 40 is pressed by a pin 43 formed on the rod 44, the rod 44 slides in horizontal direction in the figure against a bias force of a spring 45 to press the ampoule 4 positioned in the bottom.

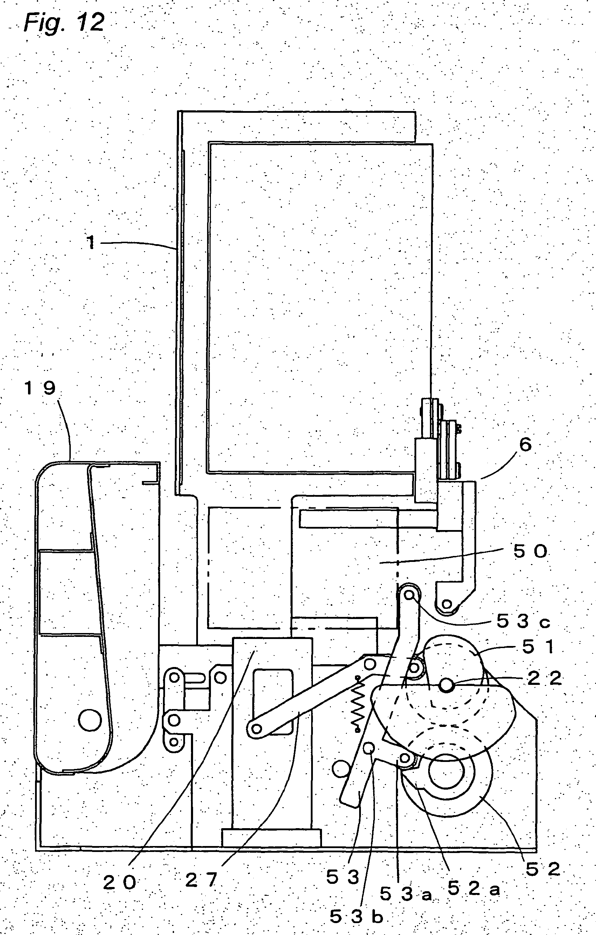

Further, as shown in Fig. 12, boxes 50 containing medicines may be fed by a rotating arm member 53. In Fig. 12, a first gear 51 is integrated with the rotating shaft 22, and a protrusion 52a provided on a second gear 52 that is geared with the first gear 51 presses a pressure receiving portion 53a of the arm member 53. Consequently, the arm member 53 rotates counter clockwise around a spindle 53b, and by a pressing portion 53c, the box 50 is fed to the left-hand direction in the figure.

It is naturally understood that the both constitutions shown in Fig. 11 and Fig. 12 are applicable to feeding of various medicine containers such as ampoules and boxes housing medicines.

## Claims

1. An article feeding device comprising:
a cassette (1) for housing articles (4) in a vertical row,
an article feeding portion (2), and
holding means (6) for holding the articles (4) positioned on a bottom of the cassette (1), the holding means (6) being composed of a pair of open/close arms having a lower horizontal portion (7) provided in detachable and rotatable manner,
the holding means (6) being provided on the cassette (1),
the article feeding portion (2) comprising:
transfer means (17) disposed below the cassette (1) and adapted to be vertically movable to downwardly transfer the lowermost article (4) held by the holding means (6),
discharge means (33) for discharging the article (4) moved downward by the transfer means (17) in a horizontal direction, and
driving means (29) for moving the transfer means and the holding means,
**characterized in that**
the article feeding device is a medicine feeding device,
the articles (4) housed in the cassette (1) are medicine containers and the article feeding portion (2) is a medicine container feeding portion,
the cassette (1) is detachably mounted on the medicine feeding portion (2),
the horizontal portion (7) has a resinous support portion (8) provided with an inclined plane for supporting the medicine container (4),
the discharging of the article by the discharge means is done in a horizontal direction, and
the driving means (29) are provided for upwardly moving the transfer means (17) for lifting the lowermost medicine container (4) of the vertical row held by the holding means (6), terminating a holding state established by the holding means (6), holding a second article (4) from the bottom while downwardly moving the transfer means (17) by a predetermined distance, and then downwardly moving the transfer means (17).

2. The medicine feeding device as defined in Claim 1, further comprising operation status detection means for detecting whether or not retrieval of the medicine container (4) is in operation, wherein if it is determined that the retrieval is not in operation based on a detection signal provided by the operation status detection means, then feeding of medicines is stopped.

3. The medicine feeding device as defined in Claim 1, wherein the holding means (17) of the cassette (1) has a transmission portion (13) going upward and downward, and making the open/close arms (6) rotate so that the support portions (8) are in detachable and rotatable manner,
the medicine container feeding portion (2) has an auxiliary arm (27) rotating and making the transfer means (17) go upward and downward,
the driving means (29) is composed of a single motor, and a driving force of the motor is transmitted to the open/close arms (6) via the transmission portion (13) from a first cam (23) integrated with the driving shaft (22),
and is transmitted to the transfer means (17) via a second cam (24) integrated with the driving shaft (22).

4. The medicine feeding device as defined in Claim 1, further comprising:
operation status detection means for detecting whether or not retrieval of the medicine container (4) is in operation, and
a closure plate (19) for opening and closing the outlet port of the medicine feeding portion (2),
wherein if it is determined that the retrieval is not in operation based on a detection signal provided by the operation status detection means, then making the closure plate (19) close the outlet port and feeding of medicines is stopped.

## Patentansprüche

1. Artikelzuführvorrichtung mit:
einer Kassette (1) zum Aufnehmen von Artikeln (4) in einer vertikalen Reihe,
einem Artikelzuführbereich (2), und
Halteeinrichtungen (6) zum Halten der Artikel (4), welche am Boden der Kassette (1) angeordnet sind, wobei die Halteeinrichtungen (6) aus zwei Öffnungs-/Schließarmen bestehen, die einen lösbar und drehbar vorgesehenen unteren horizontalen Bereich (7) aufweisen, wobei die Halteeinrichtungen (6) an der Kassette (1) vorgesehen sind,
wobei der Artikelzuführbereich (2) umfasst:
Transfereinrichtungen (17), die unter der Kassette (1) angeordnet sind und vertikal bewegbar sind, um den untersten von den Halteeinrichtungen (6) gehaltenen Artikel (4) nach unten zu übergeben,
Ausgabeeinrichtungen (33) zum Ausgeben des von den Transfereinrichtungen (17) abwärts bewegten Artikels (4) in horizontaler Richtung, und
eine Antriebseinrichtung (29) zum Bewegen der Transfereinrichtungen und der Halteeinrichtungen,
**dadurch gekennzeichnet, dass**
die Artikelzuführvorrichtung eine Medikamentenzuführvorrichtung ist,
die in der Kassette (1) aufgenommenen Artikel (4) Medikamentenbehälter sind, und der Artikelzuführbereich (2) ein Medikamentenbehälterzuführbereich ist,
die Kassette (1) lösbar an dem Medikamentenzuführbereich (2) angebracht ist,
der horizontale Bereich (7) einen Stützbereich (8) aus Harz aufweist, der mit einer schrägen Ebene zum Stützen des Medikamentenbehälters (4) versehen ist,
die Ausgabe des Artikels durch die Ausgabeeinrichtung in horizontaler Richtung erfolgt, und
die Antriebseinrichtung (29) zum Aufwärtsbewegen der Transfereinrichtungen (17) vorgesehen ist, um den untersten von den Halteeinrichtungen (6) gehaltenen Medikamentenbehälter (4) anzuheben, den Haltezustand der Halteeinrichtungen (6) zu beenden, den zweituntersten Artikel (4) zu halten, während die Transfereinrichtungen (17) über eine vorbestimmte Strecke bewegt werden, und die Transfereinrichtungen (17) anschließend nach unten zu bewegen.

2. Medikamentenzuführvorrichtung nach Anspruch 1, ferner mit einer Betriebszustandserkennungseinrichtung zum Erkennen, ob das Aufnehmen eines Medikamentenbehälters (4) durchgeführt wird, wobei, wenn basierend auf einem von der Betriebszustandserkennungseinrichtung gelieferten Erkennungssignal festgestellt wird, dass das Aufnehmen nicht durchgeführt wird, die Zufuhr von Medikamenten gestoppt wird.

3. Medikamentenzuführvorrichtung nach Anspruch 1, bei der die Halteeinrichtungen (17) der Kassette (1) ein sich auf und ab bewegenden Transmissionsteil (13) aufweist, welches die Öffnungs-/Schließarme (6) dreht, so dass die Stützbereiche (8) lösbar und drehbar sind,
wobei der Medikamentenbehälterzuführbereich (2) einen Hilfsarm (27) aufweist, der die Transfereinrichtungen (17) dreht und auf du ab bewegt,
wobei die Antriebseinrichtung (29) aus einem einzigen Motor besteht, und die Antriebskraft des Motors über das Transmissionsteil (13) von einem in die Antriebswelle (22) integrierten ersten Nocken (23) an die Öffnungs-/Schließarme (6) übertragen wird,
und die Antriebskraft an die Transfereinrichtungen (17) über einen in die Antriebswelle (22) integrierten zweiten Nocken (24) übertragen wird.

4. Medikamentenzuführvorrichtung nach Anspruch 1, ferner mit:
einer Betriebszustandserkennungseinrichtung zum Erkennen, ob das Aufnehmen des Medikamentenbehälters (4) durchgeführt wird, und
einer Schließplatte (19) zum Öffnen und Schließen der Auslassöffnung des Medikamentenzuführbereichs (2),
wobei, wenn basierend auf einem Erkennungssignal der Betriebszustanderkennungseinrichtung festgestellt wird, dass das Aufnehmen nicht durchgeführt wird, die Auslassöffnung durch die Schließplatte (19) geschlossen und die Medikamentenzufuhr gestoppt wird.

## Revendications

1. Dispositif d'alimentation d'articles, comprenant :
une cassette (1) destinée à recevoir des articles (4) dans une rangée verticale,
une partie (2) d'alimentation d'articles, et
un moyen de maintien (6) permettant de maintenir les articles (4) positionnés au fond de la cassette (1), le moyen de maintien (6) étant composé d'une paire de bras d'ouverture / fermeture dont une partie inférieure horizontale (7) est disposée de manière détachable et rotative, le moyen de maintien (6) étant disposé sur la cassette (1),
la partie (2) d'alimentation d'articles comprenant :
un moyen de transfert (17) disposé sous la cassette (1) et prévu pour être mobile verticalement afin de faire descendre l'article (4) le plus bas qui est maintenu par le moyen de maintien (6),
un moyen d'évacuation (33) permettant d'évacuer dans une direction horizontale l'article (4) qui a été descendu par le moyen de transfert (17), et
un moyen d'entraînement (29) permettant de déplacer le moyen de transfert et le moyen de maintien
**caractérisé en ce que**
le dispositif d'alimentation d'articles est un dispositif d'alimentation de contenants de médicaments, les articles (4) logés dans la cassette (1) sont des contenants de médicaments et la partie (2) d'alimentation d'articles est une partie d'alimentation de contenants de médicaments,
la cassette (1) est montée de manière amovible sur la partie (2) d'alimentation de médicaments,
la partie horizontale (7) a une partie de support en résine (8) munie d'un plan incliné pour supporter le contenant de médicaments (4), l'évacuation de l'article par le moyen d'évacuation est effectuée dans une direction horizontale, et
le moyen d'entraînement (29) est mis en oeuvre pour déplacer vers le haut le moyen de transfert (17) afin de soulever le contenant de médicaments (4) le plus bas de la rangée verticale qui est maintenu par le moyen de maintien (6), pour mettre fin à un état de maintien établi par le moyen de maintien (6), maintenir un deuxième article (4) depuis le fond tout en faisant descendre le moyen de transfert (17) sur une distance prédéterminée, puis faire descendre le moyen de transfert (17).

2. Dispositif d'alimentation de médicaments selon la revendication 1, comprenant en outre un moyen de détection d'état opérationnel permettant de détecter si la récupération du contenant de médicaments (4) est en fonctionnement ou non, dans lequel on détermine que la récupération n'est pas en fonctionnement en se basant sur un signal de détection fourni par le moyen de détection d'état opérationnel, puis l'alimentation des contenants de médicaments est alors arrêtée.

3. Dispositif d'alimentation de médicaments selon la revendication 1, dans lequel le moyen de maintien (17) de la cassette (1) a une partie de transmission (13) qui monte et descend, et fait tourner les bras d'ouverture / fermeture (6) de façon à ce que les parties de support (8) soient disposées de manière amovible et rotative, la partie (2) d'alimentation de contenants de médicaments a un bras auxiliaire (27) rotatif qui fait monter et descendre le moyen de transfert (17), le moyen d'entraînement (29) est composé d'un seul moteur, et une force d'entraînement du moteur est transmise aux bras d'ouverture / fermeture (6) par l'intermédiaire de la partie de transmission (13) par l'intermédiaire d'une première came (23) intégrée à l'arbre d'entraînement (22), et elle est transmise au moyen de transfert (17) par l'intermédiaire d'une deuxième came (24) intégrée à l'arbre d'entraînement (22).

4. Dispositif d'alimentation de médicaments selon la revendication 1, comprenant en outre :
un moyen de détection d'état opérationnel permettant de détecter si la récupération du contenant de médicaments (4) est en fonctionnement ou non, et
une plaque de fermeture (19) destinée à ouvrir et à fermer l'orifice de sortie de la partie (2) d'alimentation de médicaments,
dans lequel, s'il a été déterminé que la récupération n'est pas en fonctionnement en se basant sur un signal de détection fourni par le moyen de détection d'état opérationnel, on fait alors fermer l'orifice de sortie par la plaque de fermeture (19) et l'alimentation des contenants de médicaments est alors arrêtée.
